Europäisches Patentamt

European Patent Office

Office européen des brevets

(11) Publication number: **0 185 441**
**B1**

(12) **EUROPEAN PATENT SPECIFICATION**

(45) Date of publication of patent specification: **01.08.90**

(21) Application number: **85307039.9**

(22) Date of filing: **02.10.85**

(51) Int. Cl.⁵: **F 16 K 37/00, F 16 K 31/12**

(54) Improvements in fluid flow control valve means.

(30) Priority: **23.10.84 GB 8426785**
**27.04.85 GB 8510776**

(43) Date of publication of application:
**25.06.86 Bulletin 86/26**

(45) Publication of the grant of the patent:
**01.08.90 Bulletin 90/31**

(84) Designated Contracting States:
**DE FR**

(56) References cited:
**AT-B- 341 572**
**DE-B-1 680 082**
**DE-B-2 627 051**
**DE-C- 906 301**
**FR-A-2 224 329**
**GB-A-1 237 995**
**GB-A-2 054 101**
**US-A-4 079 753**

(73) Proprietor: **LUCAS INDUSTRIES public limited company**
**Great King Street**
**Birmingham, B19 2XF West Midlands (GB)**

(72) Inventor: **Harrison, Anthony William**
**63 Middle Park Road**
**Selly Oak Birmingham B29 4BH (GB)**

(74) Representative: **Spall, Christopher John et al**
**BARKER, BRETTELL & DUNCAN 138 Hagley Road**
**Edgbaston Birmingham B16 9PW (GB)**

Courier Press, Leamington Spa, England.

## Description

This invention relates to fluid flow control valve means of the kind which operates in response to an input load to control communication between a fluid pressure operated device, and a source of fluid pressure or a fluid reservoir, such that the device produces a given output load, the valve means comprising a housing having a single valve member movable in response to the input load, first and second valve seats co-operating with the valve member to form first and second valves, one of which operates as an inlet valve controlling communication between the device and the source, and the other operates as an exhaust valve controlling communication between the device and the reservoir, with resilient means biassing the valve member towards the valve seats.

In servo systems such as vehicle brake and clutch systems, fluid flow control valve means of the kind set forth may control pressurisation of a servo, which provides an augmented output load for operating the brakes or the clutch, in response to the input load applied to it. Alternatively, the valve means may control pressurisation of the braking system directly. When the device is inoperative, it is connected to the reservoir through the open exhaust valve, while the inlet valve is closed. When the input load is applied the exhaust valve closes and the inlet valve opens to allow pressure fluid into the device. Feedback from the device, preferably from the output load, is used to control closure of the inlet valve when the required output load is reached, and is also used to provide 'feel' for the operator. When the input load is removed the inlet valve closes and the exhaust valve opens, and if necessary is controlled by the output load. In some servo systems, the feedback from the device may not reach the valves quickly enough to control them successfully, although the feedback to the operator may be adequate.

One known valve means of the kind set forth which addresses this problem is shown in US-A-4 079 753. This shows a solenoid-operated control valve for a servo, in which the movable valve member co-operates with a first, movable exhaust seat and a second, fixed inlet seat. The exhaust seat is provided on a spool operated by the solenoid, the spool being carried by a flexible diaphragm which seals the exhaust chamber from the control chamber, and is biassed to a neutral position by opposing springs. In operation, when the inlet valve opens, fluid is admitted to the control chamber and acts on the diaphragm to counteract the load on the spool, causing the inlet valve to close again. This effect is known as negative feedback, and provides a rapid way of stabilising operation of the valve in response to a given input load, without requiring feedback from the device.

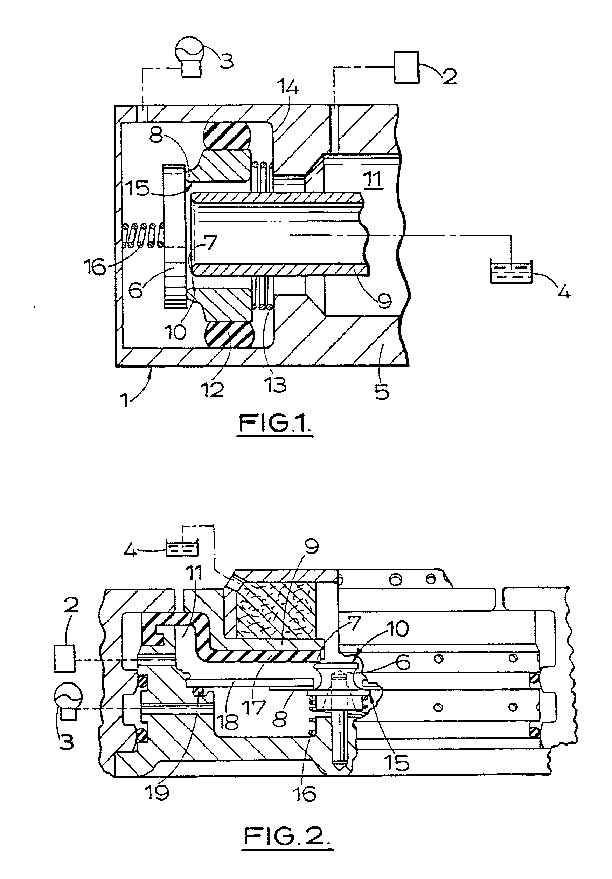

This negative feedback effect is also used in FR-A-2 224 329, which shows a control valve for a trailer braking system, which includes provision for emergency braking. In Figure 2 a single valve member can co-operate with three valve seats, to form two separate valves, one operating for normal service braking and the other for emergency braking. The first valve seat is carried by a piston movable in response to control and braking pressures acting on opposite sides of it. The second seat is carried by a piston normally held stationary by the supply pressure acting on it, against the force in a spring. The third seat is fixed. In normal service braking the valve member co-operates with the first and second seats, the second seat being held stationary, and the first seat being movable and acting on the valve member to control the valve. The third seat is not operative for normal service braking. For emergency braking, when the supply pressure fails, the second and third seats are operative. The second seat in this situation is movable, and acts on the valve member in response to the spring acting on the piston. In emergency braking the first seat is held stationary in an inoperative position. It will be noted that in each mode of operation of the control valve, there is one fixed and one movable seat, with the valve used in service braking being similar to that of US-A-4 079 753, and using the negative feedback effect. The present invention also uses this effect.

According to our invention, in a fluid flow control valve means of the kind set forth, where the first valve seat is mounted for movement in response to the input load to apply the input load to the single valve member, the second valve seat is biassed towards the valve member by resilient means, and is movable in response to the fluid pressure differential acting across it, such that when each valve opens in response to a change in the input load, the second valve seat moves in response to the subsequent change in the pressure differential to counter the effect on that valve of the change in the input load.

The arrangement, with both valve seats being movable, means that in operation the balanced position of the valve member and seats relative to the housing varies in accordance with the input load, which is advantageous in certain systems.

The first valve may comprise the exhaust valve and the second valve the inlet valve, but this has the disadvantage that the second valve seat is subjected to a pressure differential when the valve means is inoperative. To overcome this, it is preferable therefore for the first valve to be the inlet valve, and the second valve the exhaust valve.

The resilient means biassing the valve member towards the seat preferably comprises a spring of any suitable type, but may be an elastomeric member.

The second valve seat may be carried by a flexible diaphragm which allows it the necessary movement. The diaphragm may be of metal, or an elastomeric material such as rubber. A metal diaphragm may also act as means biassing the second seat towards the valve member. If an elastomeric diaphragm is used, it may also act as the biassing means, but only in constructions where the second valve seat is not subjected to a pressure differential when the valve means is inoperative. If the second valve seat is subjected to such a pressure differential, it tends to produce a permanent set in the diaphragm, which means that it is not suitable to act as a biassing means as well. In that case therefore, the second valve seat is biassed by a spring.

Some embodiments of our invention are illustrated in the accompanying drawings, in which:-

Figure 1 is a schematic cross-section of a valve means in accordance with the invention;

Figure 2 is a cross-section through a modified valve means; and

Figure 3 is a cross-section through a further modified valve means.

Figure 1 shows a fluid control valve means 1 for a servo system, the valve means operating in response to an input load to control fluid flow between a fluid pressure operated device 2 and a fluid pressure source 3 or a fluid reservoir 4, so that the device produces a given output load.

The valve means 1 has a housing 5, in which is located a valve member 6, which co-operates with first and second valve seats 7, 8 respectively. The first valve seat 7 is carried by an input member 9 in the form of a tube connected to the reservoir 4, the input load being applied to the valve means 1 by the input member 9. The valve member 6 and the first valve seat 7 form a first valve 10, which is an exhaust valve controlling communication between the reservoir 4 and a control pressure space 11 connected to the device 2. The second valve seat 8 surrounds the first valve seat 7, and is carried by an annular rubber diaphragm 12, which allows it axial movement, and also seals between the housing 1 and the seat 8. The second valve seat 8 is biassed into a retracted position by a spring 13, which abuts a shoulder 14 in the housing. The seat 8 forms with the valve member 6 a second valve 15, which is an inlet valve controlling communication between the pressure space 11 and the source 3. The valve member 6 is movable in response to the input load applied by the input member 9, against the force in a resilient means in the form of a compression spring 16. The second valve seat 8 is movable in response to the pressure differential across it, and the force in the spring 13.

In the inoperative position shown the inlet valve is closed, with the force in the spring 13 balancing the pressure differential acting across the second valve seat 8 and the valve member 6, and the force in the spring 16; the exhaust valve is open, so that the device 2 is in communication with the reservoir 4. When the input load is applied the input member 9 is moved towards the valve member 6, so that the first valve seat 7 comes into contact with the valve member 6 to close the exhaust valve, isolating the device 2 from the reservoir 4. Further movement of the input member 9 moves the valve member 6 against the spring 16, and away from the second valve seat 8. This opens the inlet valve, allowing fluid from the source 3 to control pressure space 11, and to the device 2. The control pressure therefore rises, increasing the force acting in the input direction on the second valve seat 8, which is urged towards the valve member 6 until the inlet valve is balanced. If a further increase of the control pressure is required, the inlet valve must be opened again by further movement of the input member 9 and valve member 6. The increase in pressure will again move the second valve seat 8 to balance the inlet valve.

If the input load is reduced, but not removed altogether, the input member 9 moves away from the valve member 6. This allows the inlet valve to close fully, due to spring 16, and then opens the outlet valve, connecting the pressure space 11 and the device 2 to the reservoir 4. The reduction in control pressure reduces the force acting on the second valve seat 8, so that the second valve seat 8 and the valve member 6 move towards the first valve seat 7 to balance the exhaust valve in a new position. When the input load is removed altogether, the exhaust valve is opened, and the reduction in control pressure enables the second valve seat 8 and the valve member 6 to return to their original positions.

The valve means of Figure 1 provides a negative feedback effect on opening of the inlet valve, that is, in this mode of operation the effect on the valve of a change in input load is countered by movement of the second valve seat 8 in response to the change in the pressure differential across it. A similar negative feedback effect is provided on opening of the exhaust valve, as the effect on the exhaust valve of a change in input load is countered by movement of the valve member 6 in response to the change in pressure differential across the valve seat 8 and the valve member 6.

Figure 2 shows a practical design of the valve means of Figure 1, for controlling the pressure in an air brake system. The valve means of Figure 2 is a modified version of Figure 1, and corresponding reference numerals have been applied to corresponding parts. In Figure 2 the valve member 6 is in the form of a spool while the input member 9 carries the first valve seat 7 in the form of a rubber diaphragm 17. The second valve seat 8 is carried by a flexible metal plate 18 rather than the rubber diaphragm 12. The plate 18 is sealed in the housing by a seal 19, and has sufficient resilience to act as the biassing means, so that the spring 13 is omitted. Operation of the valve means of Figure 2 is the same as that of Figure 1.

In a modification of the valve means 1 of Figure 1 (not shown) the spring 13 could be omitted, and the resilient force required to balance the second valve seat against the pressure differential would then be provided by the resilience in the diaphragm 12. With this arrangement it is possible for the second valve seat 8 to contact the shoulder 14 when the valve means is in its inoperative position. This does not affect the operation, as described, of the inlet valve, as movement of the second valve seat 8 away from the shoulder 14 is not restricted. However, operation of the exhaust valve is affected, since movement of the second valve seat 8 towards the shoulder 14 as a result of the changing pressure differential will cease once the seat 8 contacts the shoulder 14, so that the negative feedback effect will no longer operate. The loss of the negative feedback effect at this point may not be important, or may be outweighed by the simpler construction of the valve means. However, the use of the rubber diaphragm 12 as the biassing means in the arrangement shown in Figure 1 has the disadvantage that when the valve means is in its inoperative position, the diaphragm 12 is subjected to a pressure differential, which will cause it to take a permanent 'set'. This will affect its resilience characteristics, so that the valve means may not operate reliably.

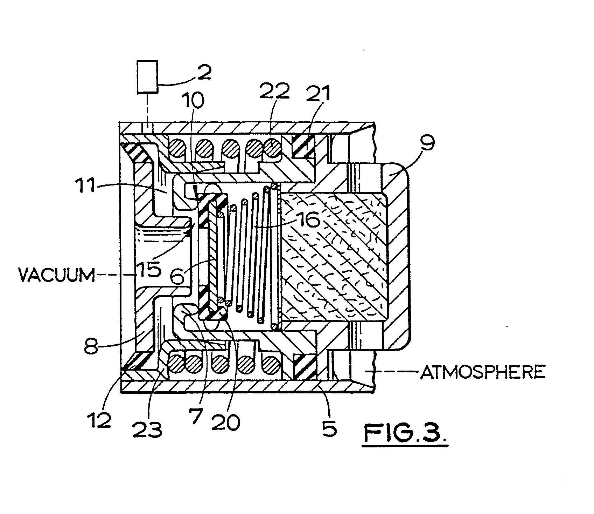

Figure 3 shows a further modified valve means which overcomes this disadvantage. Corresponding reference numerals have again been applied to corresponding parts. The valve means of Figure 3 is a servo control valve means for a vacuum-operated servo, so that the pressure source 3 is at atmospheric pressure, while the reservoir 4 is connected to a vacuum source. The valve member 6 is again in the form of a plate, and has a rubber seating portion 20. The first valve seat 7 is carried by the input member 9, which comprises a piston working in the housing 5, with a seal 21 between the seat 7 and the member 9. The input member 9 works against a spring 22 located in the housing 1 between the seat 7 and an abutment 23, which also forms a guide for the seat 7. In this embodiment the first valve 10 formed by the first seat 7 and the valve member 6 is the inlet valve. The second valve seat 8 is carried by the resilient rubber diaphragm 12, which provides a seal between the seat 8 and the housing 1, and biasses the seat 8 to its retracted position. As the second valve 15 comprises the exhaust valve, the rubber diaphragm 12 is not subjected to a pressure differential when the valve means is in the inoperative position shown. The spring 16, which biasses the valve member 6 towards the seats 7, 8, acts between the valve member 6 and the input member 9.

In the inoperative position shown, the exhaust valve is open, and the inlet valve closed. When the input load is applied to the input member 9, the input member 9 and the first valve seat 7 move against the force in the spring 22, while the spring 16 ensures that the valve member 6 stays in contact with the seat 7. The valve member 6 then contacts the second valve seat 8 to close the exhaust valve. On further movement of the input member 9, the second valve seat 8 and the valve member 6 remain stationary, as the resilient force applied to the seat 8 by the diaphragm 12 is greater than the force acting on the valve member 6 in the opposite direction. The spring 16 is therefore compressed, and the seat 7 is lifted clear of the valve member 6 to open the inlet valve. The subsequent increase in pressure in the control space 11 moves the seat 8, and the valve member 6 (due to spring 16), thus balancing the inlet valve. If the input load is reduced, but not removed altogether, the force in the spring 22 moves the valve seat 7, valve member 6 and input member 9 away from the valve seat 8, first closing the inlet valve fully, and then opening the exhaust valve. The decrease in pressure in the control space 11 causes the second valve seat 8 to move towards the valve member 6, balancing the exhaust valve in a new position. When the input load is removed altogether the exhaust valve is opened, and the parts return to their original positions.

The valve means of Figure 3 also exhibits a negative feedback effect for opening of the inlet and exhaust valves. Such a valve means may be particularly useful in a clutch servo system, where the feedback in a clutch system is through a clutch cable, which does not give a rapid response.

The valve means of Figures 1 to 3 are all of a type in which the valve member 6 and the valve seats 7, 8 are all movable, with the first seat 7 movable in response to the input load, and the second seat 8 movable in response to the pressure differential. With this type of valve, it will be noted that in the balanced position, the position of the member 6 and seats 7, 8 relative to the housing 5 varies in accordance with the input load.

## Claims

1. A fluid flow control valve means for controlling communication between a fluid pressure operated device (2) and a source of fluid pressure (3) or a fluid reservoir (4), in response to an input load such that the device (2) produces a given output load, the valve means (1) comprising a housing (5) having a single valve member (6) movable in response to the input load, first and second valve seats (7, 8) co-operating with the valve member (6) to form first and second valves (10, 15), one of which operates as an inlet valve controlling communication between the device (2) and the source (3), and the other of which operates as an exhaust valve controlling communication between the device (2) and the reservoir (4), and resilient means (16) biassing the valve member (6) towards the valve seats (7, 8), the first valve seat (7) being mounted for movement in response to the input load to apply the input load to the single valve member (6), characterised in that the second valve seat (8) is biassed towards the valve member (6) by resilient means (13, 18, 12), and is movable in response to the fluid pressure differential acting across it, such that when each valve (10, 15) opens in response to a change in the input load, the second valve seat (8) moves in response to the subsequent change in the pressure differential to counter the effect on that valve of the change in the input load.

2. A fluid flow control valve means according to claim 1, characterised in that the first valve (10) comprises the inlet valve and the second valve (15) is the exhaust valve.

3. A fluid flow control valve means according to claim 1, characterised in that the first valve (10) is the exhaust valve, and the second valve (15) is the inlet valve.

4. A fluid flow control valve means according to any preceding claim, characterised in that the resilient means (16) comprises a spring.

5. A fluid flow control valve means according to any preceding claim, characterised in that the second valve seat (8) is carried by a flexible diaphragm (12, 18).

6. A fluid flow control valve means according to claim 2, characterised in that the second valve seat (8) is carried by a flexible diaphragm (12) of elastomeric material, which also acts to bias the second valve seat (8) towards the valve member (6).

7. A fluid flow control valve means according to claim 3, characterised in that the second valve seat (8) is carried by a flexible diaphragm (12) of elastomeric material, and a bias spring (13) is incorporated to bias the second valve seat towards the valve member (6).

8. A fluid control valve means according to claim 3, characterised in that the second valve seat (8) is carried by a flexible metal diaphragm (18) which also acts to bias the second valve seat (8) towards the valve member (6).

**Patentansprüche**

1. Flüssigkeitsdurchfluß-Kontrollventil zum Steuern der Verbindung zwischen einer flüssigkeitsdruckbetriebenen Einrichtung (2) und einer Flüssigkeitsdruckquelle (3) oder einem Flüssigkeitsspeicher (4), so ansprechend auf eine Eingangslast, daß die Einrichtung (2) eine gegebene Ausgangslast erzeugt, wobei das Ventil (1) ein Gehäuse (5) mit einem ansprechend auf die Eingangslast bewegbaren einzelnen Ventilelemente (6), mit einem ersten und einem zweiten Ventilsitz (7, 8), die mit dem Ventilelement (6) zum Bilden eines ersten und zweiten Ventils (10, 15) zusammenwirken, von denen eines als Eingangsventil betrieben ist, das die Verbindung zwischen der Einrichtung (2) und der Quelle (3) steuert, und das andere als Ausstoßventil betrieben ist, das die Verbindung zwischen der Einrichtung (2) und dem speicher (4) speichert, und mit einer Federvorrichtung (16), die das Ventilelement (6) gegen die Ventilsitze (7, 8) vorspannt, aufweist, wobei der erste Ventilsitz (7) ansprechend auf die Eingangslast bewegbar angebracht ist, um die Eingangslast dem einzelnen Ventilelement (6) aufzugeben, dadurch gekennzeichnet, daß der zweite Ventilsitz (8) gegen das Ventilelement (6) durch Federvorrichtungen (13, 18, 12) vorgespannt ist und ansprechend auf das Flüssigkeitsdruckdifferential, welches über ihn wirkt, bewegbar ist, so daß, wenn jedes Ventil (10, 15) ansprechend auf eine Änderung in der Eingangslast öffnet, der zweite Ventilsitz (8) ansprechend auf die nachfolgende Änderung im Druckdifferential öffnet, um der Wirkung auf das Ventil durch die Änderung in der Eingangslast entgegenzuwirken.

2. Flüssigkeitsdurchfluß-Kontrollventil nach Anspruch 1, dadurch gekennzeichnet, daß das erste Ventil (10) das Einlaßventil umfaßt, und das zweite Ventil (15) das Ausstoßventil ist.

3. Flüssigkeitsdurchfluß-Kontrollventil nach Anspruch 1, dadurch gekennzeichet, daß das erste Ventil (10) das Ausstoßventil ist, und das zweite Ventil (15) das Einlaßventil ist.

4. Flüssigkeitsdurchfluß-Kontrollventil nach einem der vorangehenden Ansprüche, dadurch gekennzeichnet, daß die Federvorrichtung (16) eine Feder aufweist.

5. Flüssigkeitsdurchfluß-Kontrollventil nach einem der vorangehenden Ansprüche, dadurch gekennzeichnet, daß der zweite Ventilsitz (8) von einem flexiblen Diaphragma (12, 18) getragen ist.

6. Flüssigkeitsdurchfluß-Kontrollventil nach Anspruch 2, dadurch gekennzeichnet, daß der zweite Ventilsitz (8) von einem flexiblen Diaphragma (12) aus elastomerem Material getragen ist, das auch zum Vorspannen des zweiten Ventilsitzes (8) gegen das Ventilelement (6) wirkt.

7. Flüssigkeitsdurchfluß-Kontrollventil nach Anspruch 3, dadurch gekennzeichnet, daß der zweite Ventilsitz (8) von einem flexiblen Diaphragma (12) aus elastomerem Material getragen ist und eine Vorspannfeder (13) eingefügt ist, um den zweiten Ventilsitz gegen das Ventilelement (6) vorzuspannen.

8. Flüssigkeitsdurchfluß-Kontrollventil nach Anspruch 3, dadurch gekennzeichnet, daß der zweite Ventilsitz (8) von einem flexiblen Metalldiaphragma (18) getragen ist, der auch zum Vorspannen des zweiten Ventilsitzes (8) gegen das Ventilelement (6) wirkt.

**Revendications**

1. Moyen de valve de commande d'écoulement de fluide destiné à commander la communication entre un dispositif (2) fonctionnant par pression de fluide, et une source (3) de pression de fluide, ou bien un réservoir (4) de fluide, en réponse à une charge d'entrée, de façon telle que le dispositif (2) délivre une charge de sortie donnée, le moyen (1) de valve comprenant un corps (5) équipé d'un clapet unique (6) susceptible d'être déplacé en réponse à la charge d'entrée, un premier siège de clapet et un second siège de clapet (7, 8) qui coopèrent avec le clapet (6) pour constituer la première et la seconde valves (10, 15), dont l'une fonctionne en tant que valve d'entrée commandant la communication entre le dispositif (2) et la source (3), et dont l'autre fonctionne en tant que valve de décharge commandant la communication entre le dispositif (2) et le réservoir (4), et des moyens résilients (16) qui poussent le clapet (6) en direction des sièges (7, 8) de clapet, le premier siège (7) de clapet étant monté de façon à se déplacer en réponse à la charge d'entrée afin d'appliquer la charge d'entrée au clapet unique (6), caractérisé en ce que le second siège de clapet (8) est poussé en direction du clapet (6) par des moyens résilients (13, 18, 12) et se déplace en réponse à la différence des pressions qui s'exercent sur lui, de façon telle que chaque valve (10, 15) s'ouvre en réponse à la variation de la charge d'entrée, en ce que le second siège (8) de clapet se déplace en réponse à la variation subséquente de la différence des pressions, afin de s'opposer à l'effet qu'exerce sur cette valve la variation de la charge d'entrée.

2. Moyen de valve de commande d'écoulement de fluide selon la revendication 1, caractérisé en ce que la première valve (10) constitue la valve d'entrée et que la seconde valve (15) constitue la valve de décharge.

3. Moyen de valve de commande d'écoulement de fluide selon la revendication 1, caractérisé en ce que la première valve (10) est la valve de décharge et en ce que la seconde valve (15) est la valve d'entrée.

4. Moyen de valve de commande d'écoulement de fluide selon l'une quelconque des revendications précédentes, caractérisé en ce que le moyen résilient (16) est constitué par un ressort.

5. Moyen de valve de commande d'écoulement de fluide selon l'une quelconque des revendications précédentes, caractérisé en ce que le second siège (8) de clapet est porté par un diaphragme souple (12, 18).

6. Moyen de valve de commande d'écoulement de fluide selon la revendication 2, caractérisé en ce que le second siège (8) de clapet est porté par un diaphragme souple (12) en matériau élastomère, qui sert également à pousser le second siège (8) de clapet en direction du clapet (6).

7. Moyen de valve de commande d'écoulement de fluide selon la revendication 3, caractérisé en ce que le second siège (8) de clapet est porté par un diaphragme souple (12) en matériau élastomère et en ce qu'un ressort de poussée (13) eat incorporé en vue de pousser le second siège (8) de clapet en direction du clapet (6).

8. Moyen de valve de commande d'écoulement de fluide selon la revendication 3, caractérisé en ce que le second siège (8) de clapet est porté par un diaphragme (18) de métal souple qui agit également pour pousser le second siège (8) de clapet en direction du clapet (6).

FIG.1.

FIG.2.

FIG.3.